# EUROPÄISCHE PATENTSCHRIFT

(11) **EP 3 830 515 B1**
(45) Veröffentlichungstag und Bekanntmachung des Hinweises auf die Patenterteilung: **27.04.2022**
(21) Anmeldenummer: 19731179.8
(22) Anmeldetag: 06.06.2019
(51) Int. Cl.: G01B 9/02, B23K 26/03, G01B 11/02

(54) **LASERBEARBEITUNGSSYSTEM ZUR BEARBEITUNG EINES WERKSTÜCKS UND VERFAHREN ZUR BESTIMMUNG EINES ABSTANDS ZWISCHEN EINEM LASERBEARBEITUNGSKOPF UND EINEM WERKSTÜCK**
LASER MACHINING SYSTEM FOR MACHINING A WORKPIECE AND METHOD FOR DETERMINING A DISTANCE BETWEEN A LASER MACHINING HEAD AND A WORKPIECE
SYSTÈME D'USINAGE LASER POUR L'USINAGE D'UNE PIÈCE ET PROCÉDÉ POUR DÉTERMINER UNE DISTANCE ENTRE UNE TÊTE D'USINAGE LASER ET UNE PIÈCE

(30) Priorität: 31.07.2018 DE 102018118501
(43) Veröffentlichungstag der Anmeldung: 09.06.2021
(73) Patentinhaber: Precitec GmbH & Co. KG, 76571 Gaggenau (DE)
(72) Erfinder: STREBEL, Matthias, 76571 Gaggenau (DE)
(74) Vertreter: Ter Meer Steinmeister & Partner
(86) Internationale Anmeldenummer: PCT/EP2019/064873
(87) Internationale Veröffentlichungsnummer: WO 2020/025200

(56) Entgegenhaltungen:
- EP-A1- 2 535 680
- DE-A1-102013 008 269
- DE-A1-102017 128 158
- US-A1- 2016 039 045
- US-B2- 6 775 007

## Beschreibung

Die vorliegende Erfindung betrifft ein Laserbearbeitungssystem, das für die Bearbeitung eines Werkstücks mit einem Laserstrahl eingerichtet ist, und eine Messvorrichtung zur Bestimmung eines Abstands zwischen einem Laserbearbeitungskopf und einem Werkstück umfasst, und ein Verfahren für die Bearbeitung eines Werkstücks mit einem Laserstrahl, insbesondere ein Verfahren zur Bestimmung eines Abstands zwischen einem Laserbearbeitungskopf und einem Werkstück. Die Messvorrichtung umfasst einen optischen Kohärenztomographen zur Abstandsmessung zum Werkstück, der einen vergrößerten Messbereich aufweist.

### Stand der Technik

In einer Vorrichtung zur Materialbearbeitung mittels Laser, z.B. in einem Laserbearbeitungskopf etwa zum Laserschweißen oder Laserschneiden, wird der von einer Laserlichtquelle oder einem Ende einer Laserleitfaser austretende Laserstrahl mit Hilfe einer Strahlführungs- und Fokussierungsoptik auf das zu bearbeitende Werkstück fokussiert oder gebündelt. Standardmäßig wird ein Laserbearbeitungskopf mit einer Kollimatoroptik und einer Fokussierungsoptik verwendet, wobei das Laserlicht über eine Lichtleitfaser zugeführt wird.

In der Lasermaterialbearbeitung kann optische Kohärenztomografie (OCT) verwendet werden, um verschiedene Prozessparameter zu messen, wie beispielsweise den Abstand zum Werkstück beim Laserschneiden, die Kantenposition im Vorlauf sowie die Einschweißtiefe während einer Schweißung und/oder die Oberflächentopographie im Nachlauf. Hierzu kann Messlicht, wie ein OCT-Messtrahl, auf das Werkstück gerichtet werden. Optional kann der OCT-Messtrahl über das zu bearbeitende Werkstück bewegt werden, beispielsweise mittels Reflektion an mindestens einem beweglichen Spiegel.

Für eine präzise Abstandsmessung ist eine exakte Positionierung des optischen Messstrahls erforderlich. Bekannte technische Lösungen zur genauen Positionierung eines optischen Messstrahls beim Laserschweißen basieren zum Beispiel auf kamerabasierten Verfahren zur Ermittlung der Messstrahlposition relativ zum Laserstahl. Diese Verfahren beruhen dabei auf einer indirekten Ermittlung der optimalen Position des Messstrahls, die beispielsweise für die Einschweißtiefenmessung benötigt wird. Die optimale Position des Messstrahls für eine zuverlässige Einschweißtiefenmessung ist jedoch von unterschiedlichen Prozessparametern, wie z.B. der Vorschubgeschwindigkeit und dem Material des Schweißguts, abhängig und kann daher mit den indirekten Verfahren zur Positionsermittlung nicht hinreichend genau bestimmt werden. Bekannte Verfahren zur Vergrößerung des Messbereichs eines OCT Messsystems, wie sie beispielsweise in der DE 10 2013 008 269 A1 beschrieben sind, basieren auf der synchronen Anpassung der optischen Weglänge im Referenzarm beispielsweise abhängig von einer Änderung des aktuellen Bearbeitungsbereichs des Laserfokus an einer Scanner-Bearbeitungsoptik. Die Anpassung erfolgt durch eine mechanische Änderung der optischen Weglänge des Referenzarms, z.B. indem der OCT-Messstrahl durch einen Scanner-Spiegel abgelenkt wird oder indem die Position eines Endspiegels oder Prismas auf einer Linearachse verändert wird. Nachteile dieser Verfahren liegen bei einer sehr aufwendigen Ansteuerung der beschriebenen Mechanik, da diese zu jeder möglichen Einstellung des Laserfokus der Bearbeitungsoptik eine zugehörige Position oder Winkelstellung annehmen muss.

US 2016/039045 A1 offenbart ein Verfahren und ein System zur Charakterisierung von Laserbearbeitungseigenschaften durch Messung von Keyhole-Dynamiken mittels Interferometrie.

### Offenbarung der Erfindung

Es ist eine Aufgabe der vorliegenden Erfindung, ein Laserbearbeitungssystem, das für die Bearbeitung eines Werkstücks mit einem Laserstrahl eingerichtet ist, und eine Messvorrichtung zur Bestimmung eines Abstands zwischen einem Laserbearbeitungskopf und einem Werkstück umfasst, und ein Verfahren für die Bearbeitung eines Werkstücks mit einem Laserstrahl, insbesondere ein Verfahren zur Bestimmung eines Abstands zwischen einem Laserbearbeitungskopf und einem Werkstück anzugeben, die eine präzise und fehlerfreie Abstandsmessung zu einem Werkstück ermöglichen. Insbesondere ist es eine Aufgabe der vorliegenden Erfindung, ein Laserbearbeitungssystem mit einer Messvorrichtung mit einem vergrößerten Messbereich eines OCT-Messsystems anzugeben, die eine reduzierte Komplexität aufweist.

Diese Aufgabe wird durch den Gegenstand der unabhängigen Ansprüche 1 und 10 gelöst. Vorteilhafte Ausgestaltungen der Erfindung sind in den abhängigen Ansprüchen angegeben.

Gemäß einem Aspekt der vorliegenden Offenbarung ist eine Messvorrichtung zur Bestimmung eines Abstands zwischen einem Laserbearbeitungskopf und einem Werkstück angegeben. Die Messvorrichtung umfasst einen optischen Kohärenztomographen, der dazu eingerichtet ist, einen Abstand zwischen dem Bearbeitungskopf und dem Werkstück zu bestimmen. Der optische Kohärenztomograph umfasst einen Messarm zum Leiten von vom Werkstück reflektiertem Messlicht und einen Referenzarm mit mehr als zwei Referenzstufen, die verschiedene optische Weglängen aufweisen. Die Messvorrichtung umfasst ferner eine Auswerteeinheit, die eingerichtet ist, den Abstand basierend auf einer Überlagerung von Messlicht aus dem Messarm und Messlicht aus dem Referenzarm zu bestimmen.

Gemäß einem Aspekt der vorliegenden Offenbarung ist ein Laserbearbeitungssystem, das für die Bearbeitung eines Werkstücks mit einem Laserstrahl eingerichtet ist, angegeben. Das Laserbearbeitungssystem umfasst einen Bearbeitungskopf, etwa einen Laserschneid- oder Laserschweißkopf, sowie einen optischen Kohärenztomographen, der dazu eingerichtet ist, einen Abstand zwischen dem Bearbeitungskopf und dem Werkstück, z.B. einer Stelle auf bzw. in dem Werkstück, zu messen, wobei in dem Kohärenztomographen Messlicht, das von dem Werkstück reflektiert wird, mit Messlicht interferiert, das in einem Referenzarm mit mehr als zwei Referenzstufen reflektiert wird. Die mehr als zwei Referenzstufen umfassen eine erste Referenzstufe, die eingerichtet ist, dass in der ersten Referenzstufe reflektiertes Messlicht eine erste optische Weglänge zurücklegt, und eine zweite Referenzstufe, die eingerichtet ist, dass in der zweiten Referenzstufe reflektiertes Messlicht eine zweite optische Weglänge, die von der ersten optischen Weglänge verschieden ist, zurücklegt. Das vom Werkstück reflektierte Messlicht wird mit dem reflektierten Messlicht der ersten und zweiten Referenzstufe überlagert, woraus der Abstand bestimmt werden kann. Denn durch das Überlagern kann das vom Werkstück reflektierte Messlicht mit Messlicht eines entsprechenden Referenzarms interferieren. Zum Beispiel kann der Abstand zu einem Einstichgrund und/oder zu einer Werkstückoberfläche bzw. eine Einstichtiefe bestimmt werden.

Erfindungsgemäß wird das Messlicht des OCT-Sensorsystems im Referenzarm auf mehr als zwei optische Wegstrecken (Referenzstufen) aufgeteilt, die unterschiedliche optische Längen aufweisen. Ein Vorteil dieser Anordnung ist, dass das Messlicht aus dem Messarm aufgrund der Kohärenzlänge automatisch mit dem Anteil des Messlichts derjenigen Referenzstufe des Referenzarms interferiert, die die passende optische Weglänge aufweist. Dies ist insbesondere dann der Fall, wenn alle Referenzstufen zu jedem Zeitpunkt erfindungsgemäß gleichmäßig ausgeleuchtet sind. Dadurch entfällt eine synchrone und somit aufwändige Ansteuerung eines mechanischen Elements im Referenzarm, die bei den bisher bekannten herkömmlichen Lösungen zum Einsatz kommt.

Ein weiterer Vorteil der Erfindung ist, dass es keinen Zeitversatz zwischen aufeinanderfolgenden Messungen gibt, der durch den Referenzarm bedingt ist. Bei einem Remote-Bearbeitungssystem kann es beispielweise vorkommen, dass die Position des Bearbeitungslasers auf dem Bauteil durch eine Ablenkung über die Scanner-Spiegel in sehr kurzer Zeit verändert wird. Durch den erfindungsgemäßen Gegenstand kann auch bei einer solchen schnellen Änderung eine lückenlose Abstandsmessung garantiert werden, da das Messlicht aus dem Messarm (oder dem Scanner) automatisch mit dem passenden Messlicht einer Referenzstufe des Referenzarms interferiert. Dies kann durch herkömmliche Techniken, die auf einer mechanischen Adaption der Länge des Referenzarms basieren, wegen zu großen Umschaltzeiten unter Umständen nicht erreicht werden.

Das Messlicht bzw. der (optische) Messstrahl kann von einer Lichtquelle des Kohärenztomographen erzeugt werden. Der Kohärenztomograph kann eine Auswerteeinheit mit einem Detektor oder Sensor aufweisen, der dazu eingerichtet ist, eine Überlagerung des im Messarm und Referenzarm reflektierten Messlichts zu erfassen und aus der Interferenz den Abstand zwischen dem Bearbeitungskopf und dem Werkstück zu bestimmen.

Die erste Referenzstufe kann eine erste optische Weglänge aufweisen, die einen ersten Abstandsbereich abdeckt. Die zweite Referenzstufe kann eine zweite optische Weglänge aufweisen, die einen zweiten Abstandsbereich abdeckt. Die erste optische Weglänge kann kleiner sein als die zweite optische Weglänge. Der erste und der zweite Abstandsbereich sind zueinander versetzt, können aber überlappen. Beispielsweise kann der erste Abstandsbereich kleinere Werte enthalten, als der zweite Abstandsbereich. Die Abstandsbereiche können gleich groß sein. Die Abstandsbereiche können einem Messbereich des Kohärenztomographen entsprechen, der von der Kohärenzlänge des Messlichts abhängt. Der Messbereich des Kohärenztomographen kann beispielsweise ca. 16 mm betragen.

Vorzugsweise ist die Referenzstufe bekannt, aus der das Licht mit dem vom Werkstück reflektierten Messlicht zur Abstandsbestimmung interferiert. Interferiert Licht aus der zweiten Referenzstufe mit dem vom Werkstück reflektierten Messlicht und wird daraus ein Messwert ermittelt, kann daher eine Auswerteeinheit eingerichtet sein, einen vorgegebenen Offset entsprechend dem zweiten Abstandsbereich zu dem Messwert zu addieren, um den Abstand zu bestimmen. Beispielsweise kann ein anfänglicher Abstand und die entsprechende Referenzstufe bekannt sein und eine Abstandsänderung verfolgt werden. Alternativ oder zusätzlich kann die Auswerteeinheit eingerichtet sein, um z.B. durch einen Sensor zur kapazitiven oder induktiven Abstandsmessung, zu ermitteln, in welchen Abstandsbereich der zu messende Abstand fällt und welche Referenzstufe diesem Abstandsbereich entspricht. Die Auswerteeinheit kann aber auch Positionsdaten des Bearbeitungskopfs von einer Roboterarmsteuerung oder Positionsdaten eines oder mehrerer Scan-Spiegel von einer Scannersteuerung erhalten, und daraus den relevanten Abstandsbereich und die entsprechende Referenzstufe ermitteln.

Der optische Kohärenztomograph weist eine Strahlteileranordnung auf, um das Messlicht auf die mehr als zwei Referenzstufen aufzuteilen. Die Strahlteileranordnung ist eingerichtet, um das Messlicht zu im Wesentlichen gleichen Teilen, d.h. mit gleicher Intensität, auf die mehr als zwei Referenzstufen aufzuteilen. Hierbei wird das Messlicht im Referenzarm jeweils zu einem gleichen Anteil auf die einzelnen Wegstrecken aufgeteilt. Im nicht beanspruchten Fall von zwei Referenzstufen kann die Intensität des Messlichts jeweils 50%, bei erfindungsgemäßen drei Referenzstufen jeweils 33%, usw. sein. Dadurch sind die OCT-Signalqualitäten bei einer Abstandsmessung für alle Referenzstufen identisch.

Vorzugsweise umfasst die Strahlteileranordnung wenigstens ein Element, das aus der Gruppe ausgewählt ist, die einen reflektierenden Spiegel, einen teildurchlässigen Spiegel, eine Prismenanordnung und einen optischen Faserkoppler umfasst. Der optische Faserkoppler kann eingerichtet sein, das eingehende Licht aus einer Faser auf mindestens zwei Fasern aufzuteilen. Die Strahlteileranordnung kann eines dieser Elemente in mehrfacher Ausführung oder eine beliebige Kombination der Elemente umfassen. Gemäß einer Ausführungsform basiert die Aufteilung des Messlichts auf die einzelnen Referenzstufen auf einem Freistrahl, der jeweils an einem halbdurchlässigen optischen Element, z.B. an einem halbdurchlässigen Spiegel oder Prisma, teilreflektiert wird. Die mehr als zwei Referenzstufen sind aufeinanderfolgend angeordnet, wobei die Strahlteileranordnung einen reflektierenden Endspiegel an einer letzten Referenzstufe der mehr als zwei Referenzstufen und ein halbdurchlässiges optisches Element an wenigstens einer, und insbesondere jeder, der verbleibenden Referenzstufen aufweist. Somit kann der Messstrahl durch das halbdurchlässige optische Element aufgespalten werden, sodass Messlicht in die jeweilige Referenzstufe eintreten bzw. an dem halbdurchlässigen optischen Element zur folgenden Referenzstufe reflektiert werden kann.

In einer anderen Ausführungsform kann die Aufteilung des Messlichts mit Hilfe von Faser-Technologie umgesetzt werden. Eine mögliche Ausführung dafür besteht darin, mehrere Faser-Teilstücke (oder Faserabschnitte) aneinanderzureihen, wobei Faserstecker (oder Faserkoppler) derart platziert sind, dass das Messlicht für die einzelnen Referenzstufen bereitgestellt wird. Insbesondere kann die Strahlteileranordnung eine Vielzahl von aufeinanderfolgenden Faserabschnitten aufweisen, wobei das Messlicht für jede Referenzstufe von einem jeweiligen Faserabschnitt bereitgestellt wird.

Erfindungsgemäß sind die optischen Weglängen aller Referenzstufen der mehr als zwei Referenzstufen unterschiedlich. Insbesondere können sich die optischen Weglängen aller Referenzstufen um denselben Weglängenunterschied unterscheiden. Mit anderen Worten können die entsprechenden Abstandsbereiche aller Referenzstufen gleich groß, aber zu anderen Werten verschoben sein. Die optische Weglänge kann sukzessive von einer ersten Referenzstufe zu einer letzten Referenzstufe jeweils um denselben Weglängenunterschied zunehmen oder abnehmen. Insbesondere können die Weglängenunterschiede zwischen benachbarten Referenzstufen identisch sein.

In einigen Ausführungsformen weist der optische Kohärenztomograph einen einfachen Messbereich auf, der von der Kohärenzlänge des Messlichts abhängt. Hierbei kann der einfache Messbereich einem Abstandsbereich entsprechen, der maximal mit einer Referenzstufe messbar ist. Ein Weglängenunterschied zwischen der ersten optischen Weglänge und der zweiten optischen Weglänge kann kleiner oder gleich dem einfachen Messbereich, vorzugsweise 70% bis 100% des einfachen Messbereichs, sein. Beispielsweise kann der Unterschied der optischen Weglänge zwischen zwei benachbarten Referenzstufen so gewählt werden, dass er in etwa dem einfachen Messbereich des OCT-Sensors entspricht. Alternativ kann es einen kleinen Überlappbereich geben, d.h. der Weglängenunterschied ist etwas kleiner als der einfache Messbereich des Sensors. Dadurch kann gewährleistet werden, dass bei einer kontinuierlichen Abstandänderung eines Messobjekts im Messarm jeweils ein stabiles OCT Interferenz-Signal aus der nachfolgenden Referenzstufe entsteht, bevor das Interferenz-Signal der davor liegenden Referenzstufe verschwindet.

Gemäß einem weiteren Aspekt der vorliegenden Offenbarung ist ein Verfahren für einen Laserbearbeitungskopf zur Bearbeitung eines Werkstücks mit einem Laserstrahl insbesondere ein Verfahren zur Bestimmung eines Abstands zwischen einem Laserbearbeitungskopf und einem Werkstück, angegeben. Das Verfahren umfasst Richten von Messlicht eines optischen Kohärenztomographen auf das Werkstück und in mehr als zwei Referenzstufen eines Referenzarms, wobei optische Weglängen des Messlichts in den mehr als zwei Referenzstufen unterschiedlich sind, Überlagern des vom Werkstück reflektierten Messlichts mit dem in den mehr als zwei Referenzstufen reflektierten Messlicht, und Bestimmen eines Abstands zwischen dem Bearbeitungskopf und dem Werkstück basierend auf der Überlagerung.

Das Verfahren kann durch den Bearbeitungskopf der vorliegenden Offenbarung implementiert werden. Zudem kann der Bearbeitungskopf eingerichtet sein, um das Verfahren gemäß der vorliegenden Offenbarung auszuführen.

### Kurze Beschreibung der Zeichnungen

Ausführungsbeispiele der Offenbarung sind in den Figuren dargestellt und werden im Folgenden näher beschrieben. Es zeigen:
Figur 1 ein Laserbearbeitungssystem mit einem Bearbeitungskopf gemäß Ausführungsformen der vorliegenden Offenbarung,
Figur 2 einen Bearbeitungskopf mit einem optischen Kohärenztomographen gemäß einem nicht beanspruchten Beispiel,
Figur 3 einen Referenzarm des optischen Kohärenztomographen gemäß Ausführungsformen der vorliegenden Offenbarung, und
Figur 4 ein Flussdiagramm eines Verfahrens für die Bearbeitung eines Werkstücks mit einem Laserstrahl.

### Ausführungsformen der Offenbarung

Im Folgenden werden, sofern nicht anders vermerkt, für gleiche und gleichwirkende Elemente gleiche Bezugszeichen verwendet.

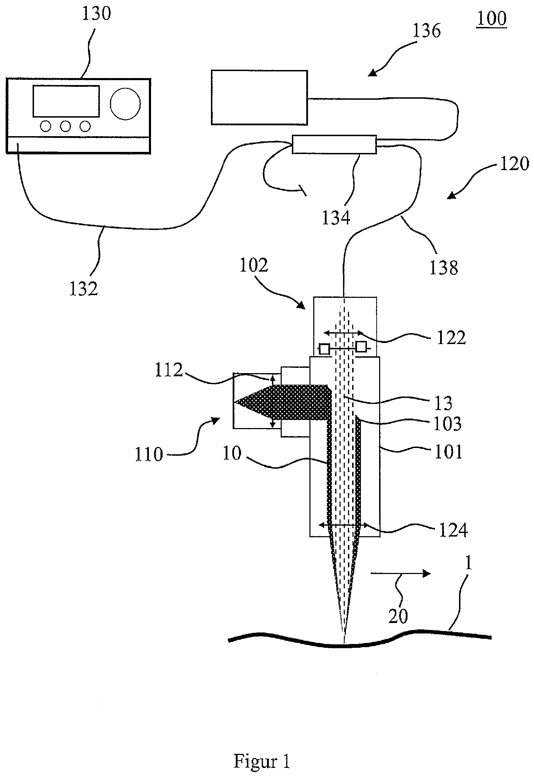

Figur 1 zeigt eine schematische Darstellung eines Laserbearbeitungssystems 100 gemäß Ausführungsformen der vorliegenden Offenbarung. Das Laserbearbeitungssystem 100 umfasst einen Bearbeitungskopf 101, und insbesondere einen Laserschneidoder Laserschweißkopf.

Das Laserbearbeitungssystem 100 umfasst eine Laservorrichtung 110 zum Erzeugen eines Laserstrahls 10 (auch als "Bearbeitungsstrahl" oder "Bearbeitungslaserstrahl" bezeichnet) und eine Messeinrichtung zum Messen eines Abstands zwischen einem Endabschnitt des Bearbeitungskopfes 101 und einem Werkstück 1. Die Messeinrichtung umfasst einen optischen Kohärenztomographen 120, und insbesondere einen optischen Kurzkohärenz-Tomographen.

Die Laservorrichtung 110 kann eine Kollimatorlinse 112 zur Kollimation des Laserstrahls 10 aufweisen. Innerhalb des Bearbeitungskopfes 101 wird der Laserstrahl 10 durch eine geeignete Optik 103 um etwa 90° in Richtung des Werkstücks 1 abgelenkt. Der Kohärenztomograph 120 umfasst typischerweise eine Kollimator-Optik 122, die eingerichtet ist, um einen optischen Messstrahl 13 zu kollimieren, und eine Fokussier-Optik 124, die eingerichtet ist, um den optischen Messstrahl 13 auf das Werkstück 1 zu fokussieren.

In einigen Ausführungsformen können der Laserstrahl 10 und der optische Messstrahl 13 zumindest streckenweise koaxial sein, und können insbesondere zumindest streckenweise koaxial überlagert sein. Beispielsweise kann der Kohärenztomograph 120 eingerichtet sein, um den optischen Messstrahl 13 in einen Strahlengang der Laservorrichtung 110 einzukoppeln. Die Zusammenführung des optischen Messstrahls 13 und des Laserstrahl 10 kann nach der Kollimator-Optik 122 und vor der Fokussier-Optik 124 erfolgen.

In typischen Ausführungsformen, die mit anderen hier beschriebenen Ausführungsformen korrigiert werden können, sind die Kollimator-Optik 122 und die Fokussier-Optik 124 in den Bearbeitungskopf 101 integriert. Beispielsweise kann der Bearbeitungskopf 101 ein Kollimatormodul 102 umfassen, das in den Bearbeitungskopf 101 integriert oder am Bearbeitungskopf 101 montiert ist. Die Fokussier-Optik 124 kann eine gemeinsame Fokussier-Optik, wie beispielsweise eine Fokuslinse, für den Laserstrahl 10 und den Messstrahl 13 sein.

Das Laserbearbeitungssystem 100 oder Teile davon, wie beispielsweise der Bearbeitungskopf 101, kann gemäß Ausführungsformen entlang einer Bearbeitungsrichtung 20 bewegbar sein. Die Bearbeitungsrichtung 20 kann eine Schneid- oder Schweißrichtung und/oder eine Bewegungsrichtung des Laserbearbeitungssystems 100, wie beispielsweise des Bearbeitungskopfes 101, bezüglich des Werkstücks 1 sein. Insbesondere kann die Bearbeitungsrichtung 20 eine horizontale Richtung sein. Die Bearbeitungsrichtung 20 kann auch als "Vorschubrichtung" bezeichnet werden.

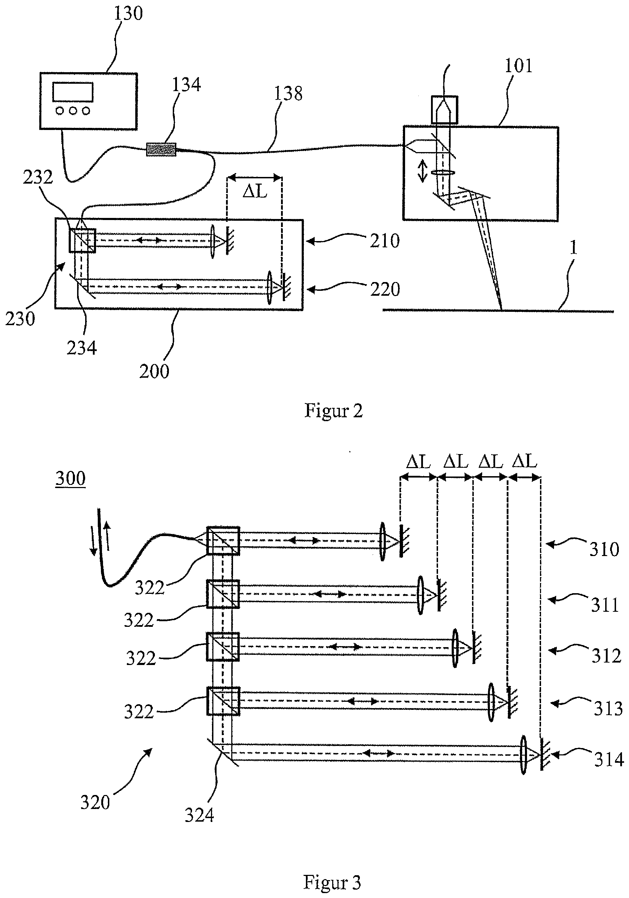

In der vorliegenden Offenbarung basiert die Abstandsmessung auf dem Prinzip der optischen Kohärenztomographie, die sich unter Zuhilfenahme eines Interferometers die Kohärenzeigenschaften von Lichts zunutze macht. Der optische Kohärenztomograph 120 kann eine Auswerteeinheit 130 mit einer breitbandigen Lichtquelle (z.B. einer Superlumineszenzdiode, SLD) umfassen, die das Messlicht in einen Lichtwellenleiter 132 koppelt. In einem Strahlteiler 134, der vorzugsweise einen Faserkoppler aufweist, wird das Messlicht in einen Referenzarm 136 und einen Messarm aufgespalten, der über einen Lichtwellenleiter 138 in den Bearbeitungskopf 101 führt. Erfindungsgemäß umfasst der Referenzarm 136 mehr als zwei aufeinanderfolgende Referenzstufen (Figur 3) für eine Vergrößerung des Messbereichs des optischen Kohärenztomographen 120.

Der optische Messstrahl 13 kann beispielsweise auf eine Oberfläche des Werkstücks 1 gelenkt werden. Das von der Oberfläche zurückreflektierte Messlicht wird durch die Fokussier-Optik 124 auf die Austritts-/Eintrittsfläche des Lichtwellenleiters 138 abgebildet, im Faserkoppler 134 mit dem zurückreflektierten Licht aus dem Referenzarm 136 überlagert und anschließend zurück in die Auswerteeinheit 130 gelenkt. Das überlagerte Licht enthält Informationen über den Weglängenunterschied zwischen dem Referenzarm 136 und dem Messarm. Diese Informationen werden in der Auswerteeinheit 130 ausgewertet, wodurch der Benutzer Informationen über den Abstand zwischen der Oberfläche des Werkstücks und dem Bearbeitungskopf 101 erhält.

Der erfindungsgemäße Referenzarm ist im Folgenden unter Bezugnahme auf die Figuren 2 und 3 näher beschrieben. Figur 2 zeigt den Bearbeitungskopf 101 mit dem optischen Kohärenztomographen gemäß einem nicht beanspruchten Beispiel der vorliegenden Offenbarung.

Der optische Kohärenztomograph kann für optische Abstandsmessungen bei der Lasermaterialbearbeitung, z.B. beim Schneiden, Schweißen, Abtragen sowie additiver SLM (Selective Laser Melting) und LMD (Laser Material Deposition) mittels Laserstrahlen verwendet werden. Insbesondere erstreckt sich der Einsatzbereich des erfindungsgemäßen optischen Kohärenztomographen über Prozesse, die einen großen optischen Messbereich des OCT-Messsystems erfordern.

Der optische Kohärenztomograph ist dazu eingerichtet, einen Abstand zwischen dem Bearbeitungskopf 101 und dem Werkstück 1 zu messen, wobei in dem Kohärenztomographen von einer Messlichtquelle erzeugtes Messlicht, das von dem Werkstück 1 reflektiert wird, mit Messlicht interferiert, das im Referenzarm 200 von zwei oder mehr Referenzstufen reflektiert wird. Die zwei oder mehr Referenzstufen umfassen eine erste Referenzstufe 210, die eingerichtet ist, damit in der ersten Referenzstufe 210 reflektiertes Messlicht eine erste optische Weglänge zurücklegt, und eine zweite Referenzstufe 220, die eingerichtet ist, damit in der zweiten Referenzstufe 220 reflektiertes Messlicht eine zweite optische Weglänge, die von der ersten optischen Weglänge verschieden ist, zurücklegt. Das vom Werkstück 1 reflektierte Messlicht wird mit dem reflektierten Messlicht der ersten Referenzstufe 210 und dem reflektierten Messlicht der zweiten Referenzstufe 220 interferiert. Aus der Interferenz kann der Abstand zwischen dem Bearbeitungskopf 101 und dem Werkstück 1 bestimmt werden.

Erfindungsgemäß sind die optischen Weglängen aller Referenzstufen der mehr als zwei Referenzstufen unterschiedlich. Insbesondere können sich die optischen Weglängen aller Referenzstufen um denselben Weglängenunterschied ΔL oder ein Vielfaches davon unterscheiden. Mit dem Vorsehen der zwei oder mehr Referenzstufen wird der effektive Messbereich des OCT-Messsystems um einen Bereich vergrößert, der von der Anzahl der Referenzstufen N und dem Unterschied der optischen Weglänge zwischen zwei benachbarten Stufen ΔL abhängt.

Die Vergrößerung des Messbereich kann beispielsweise als (N-1)^{∗}ΔL angegeben werden. Diese Formel gilt näherungsweise, wenn der Wegunterschied so gewählt wird, dass es jeweils einen kleinen Überlappbereich zur jeweils nächsten Referenzstufe gibt, wenn also ΔL etwas kleiner als der einfache Messbereich des OCT-Sensors ist.

Dadurch kann gewährleistet werden, dass bei einer kontinuierlichen Abstandänderung eines Messobjekts im Messarm jeweils ein stabiles OCT-Interferenz-Signal aus der nachfolgenden Referenzstufe entsteht, bevor das Interferenz-Signal der davor liegenden Referenzstufe verschwindet.

In einigen Ausführungsformen weist der optische Kohärenztomograph 220 eine Strahlteileranordnung 230 auf, um das von der Messlichtquelle erzeugte Messlicht auf die zwei (nicht beansprucht) oder, erfindungsgemäß, mehr als zwei Referenzstufen gleichmäßig aufzuteilen. Erfindungsgemäß ist die Strahlteileranordnung 230 eingerichtet, um das Messlicht zu im Wesentlichen gleichen Teilen auf mehr als zwei aufeinanderfolgend angeordnete Referenzstufen aufzuteilen. Hierbei wird das Messlicht im Referenzarm 200 jeweils zu einem gleichen Anteil auf die einzelnen Wegstrecken aufgeteilt. Im nicht beanspruchten Fall von zwei Referenzstufen kann die Intensität des Messlichts jeweils 50%, bei erfindungsgemäßen drei Referenzstufen jeweils 33%, usw. sein. Dadurch sind die OCT-Signalqualitäten bei einer Abstandsmessung für alle Referenzstufen identisch.

Typischerweise umfasst die Strahlteileranordnung 230 wenigstens ein Element, das aus der Gruppe ausgewählt ist, die einen reflektierenden Spiegel 234, einen teildurchlässigen Spiegel, eine Prismenanordnung 232 und eine optische Faser umfasst. Die Strahlteileranordnung kann eines der Elemente in mehrfacher Ausführung oder eine beliebige Kombination der Elemente umfassen. Im nicht erfindungsgemäßen Beispiel der Figur 2 werden eine Prismenanordnung 232 und ein reflektierender Spiegel 234 verwendet, um das Messlicht auf die erste Referenzstufe 210 und die zweite Referenzstufe 220 aufzuteilen, und insbesondere gleichmäßig aufzuteilen.

Figur 3 zeigt einen Referenzarm 300 des optischen Kohärenztomographen gemäß Ausführungsformen der vorliegenden Erfindung. Der Referenzarm 300 umfasst eine Vielzahl von Referenzstufen, nämlich eine erste Referenzstufe 310, eine zweite Referenzstufe 311, eine dritte Referenzstufe 312, eine vierte Referenzstufe 313 und eine fünfte Referenzstufe 314. Ein Weglängenunterschied zwischen benachbarten bzw. aufeinanderfolgenden Referenzstufen ist mit ΔL angegeben. Der Weglängenunterschied zwischen benachbarten bzw. aufeinanderfolgenden Referenzstufen kann für alle benachbarten Referenzstufen im Wesentlichen identisch sein.

Im Beispiel der Figur 3 basiert die Aufteilung des Messlichts auf die einzelnen Referenzstufen auf einem Freistrahl, der jeweils an z.B. an einem Endspiegel 324 oder einem Prisma bzw. einer Prismenanordnung 322 einer Strahlteileranordnung 320 zurückreflektiert wird. Die zwei oder mehr Referenzstufen sind aufeinanderfolgend angeordnet, wobei die Strahlteileranordnung 320 einen reflektierenden Endspiegel 324 an einer letzten Referenzstufe der mehr als zwei Referenzstufen und eine Prismenanordnung 322 an jeder der verbleibenden Referenzstufen aufweist.

In einer anderen Ausführungsform (nicht gezeigt) kann die Aufteilung des Messlichts mit Hilfe von Faser-Technologie umgesetzt werden, wobei die Strahlteileranordnung eine Vielzahl von Faserstecker bzw. -koppler und eine Vielzahl von Lichtleitfasern bzw. Faserabschnitte aufweist. Hierbei wird das über eine Lichtleitfaser geleitete Messlicht durch N Faserkoppler auf n weitere Lichtleitfasern bzw. Faserabschnitte aufgeteilt, sodass das Messlicht für die einzelnen Referenzstufen bereitgestellt wird. Beispielsweise können Faserkoppler verwendet werden, die das Licht auf zwei Lichtleitfasern bzw. Faserabschnitte aufteilen. Um gleiche Intensitäten in den Referenzstufen zu gewährleisten, wird das Messlicht vorzugsweise so aufgeteilt, dass es zu jeder Referenzstufe die gleiche Anzahl an Lichtleitfasern und/oder Faserkoppler durchläuft. Somit können n^{∗}N Referenzstufen gleichmäßig ausgeleuchtet werden.

Die letzte Referenzstufe kann die Referenzstufe mit der längsten optischen Weglänge für das Messlicht sein. Die erste Referenzstufe kann die Referenzstufe mit der kürzesten optischen Weglänge für das Messlicht sein. Die optische Weglänge der dazwischenliegenden Referenzstufen kann von der ersten Referenzstufe zur letzten Referenzstufe sukzessive um den Weglängenunterschied ΔL zunehmen. Beispielsweise kann die erste Referenzstufe einem ersten Abstandsbereich von 0 bis 16 mm entsprechen, die zweite Referenzstufe einem zweiten Abstandsbereich von 16 bis 32 mm, etc. Somit können die den einzelnen Referenzstufen bzw. optischen Weglängen entsprechenden Abstandsbereiche gleich groß sein. Die Abstandsbereiche können auch überlappen, um eine möglichst lückenfreie und signalstarke Messung zu ermöglichen. Beispielsweise kann ein erster Abstandsbereich 0 bis 16 mm sein, ein zweiter Abstandsbereich 12 bis 28 mm etc. Eine Überlappung benachbarter Abstandsbereiche kann ca. 10 - 25% der Größe der Abstandsbereiche entsprechen. Bei Referenzstufen mit überlappenden Abstandsbereichen kann es zur Ausbildung von zwei oder mehreren Peaks im Signal kommen. In diesem Fall kann die Auswerteeinheit eingerichtet sein, den Peak entsprechend dem kleinsten Abstand zu verwenden.

Um den Abstand aus Messwerten von einer Referenzstufe zu bestimmen, die größere optische Weglängen als die erste Referenzstufe mit der kleinsten optischen Weglänge aufweist, muss zu den Messwerten ein vorgegebener Offset entsprechend einer Verschiebung des Messbereichs bzw. des Abstandsbereichs dieser Referenzstufe addiert werden. Wenn beispielsweise ein erster Abstandsbereich 0 bis 16 mm und ein zweiter Abstandsbereich 16 bis 32 mm ist, muss auf die Messwerte der zweiten Referenzstufe als Offset 16 mm addiert werden, um den Abstand zu ermitteln. Denn die möglichen Messwerte der Referenzstufen sind gleich und liegen in diesem Beispiel für alle Referenzstufen zwischen 0 und 16. Interferiert Licht aus der zweiten Referenzstufe mit dem vom Werkstück reflektierten Messlicht und wird daraus ein Messwert ermittelt, kann daher die Auswerteeinheit eingerichtet sein, den vorgegebenen Offset entsprechend der zweiten Referenzstufe bzw. dem zweiten Abstandsbereich zu dem Messwert zu addieren, um den Abstand zu bestimmen. Die Referenzstufe, aus der das Licht mit dem vom Werkstück reflektierten Messlicht zur Abstandsbestimmung interferiert, kann beispielsweise dadurch ermittelt werden, dass ein anfänglicher Abstand und die entsprechende Referenzstufe bekannt sind und eine Abstandsänderung verfolgt wird. Wenn beispielsweise ein anfänglicher Abstand in den ersten Abstandsbereich der ersten Referenzstufe fällt und der Abstand dann vergrößert wird und in den zweiten Abstandsbereich fällt, werden im Kohärenztomographen zunächst ansteigende Messwerte und dann ein Sprung in den Messwerten zu niedrigen Werten erfasst. Denn sobald die Interferenz, die der Abstandsmessung zugrunde liegt, aus der nächst höheren Referenzstufe stammt, ändert sich der Betrag der Messwerte zu niedrigen Werten des Messwertbereichs. In oben angegebenen Beispiel würden aus der ersten Referenzstufe Messwerte von 0 bis 16 mm ermittelt, die einem Abstand von 0 bis 16 mm entsprechen. Ändert sich ein folgender Messwert von 16 mm sprunghaft auf 0 oder 1 mm, stammt die Interferenz aus der benachbarten zweiten Referenzstufe und ein Offset von 16 mm muss addiert werden. Alternativ oder zusätzlich kann die Auswerteeinheit eingerichtet sein, um z.B. durch einen Sensor zur kapazitiven oder induktiven Abstandsmessung, zu ermitteln, in welchen Abstandsbereich der zu messende Abstand fällt und welche Referenzstufe diesem Abstandsbereich entspricht, um anschließend den entsprechenden Offset auf die Messwerte zu addieren. Die Auswerteeinheit kann Positionsdaten des Bearbeitungskopfs von einer Roboterarmsteuerung oder Positionsdaten eines oder mehrerer Scan-Spiegel von einer Scannersteuerung erhalten, und daraus den relevanten Abstandsbereich und die entsprechende Referenzstufe sowie den zu addierenden Offset ermitteln. Der Offset der ersten Referenzstufe bzw. der Referenzstufe mit der kleinsten optischen Weglänge kann 0 sein.

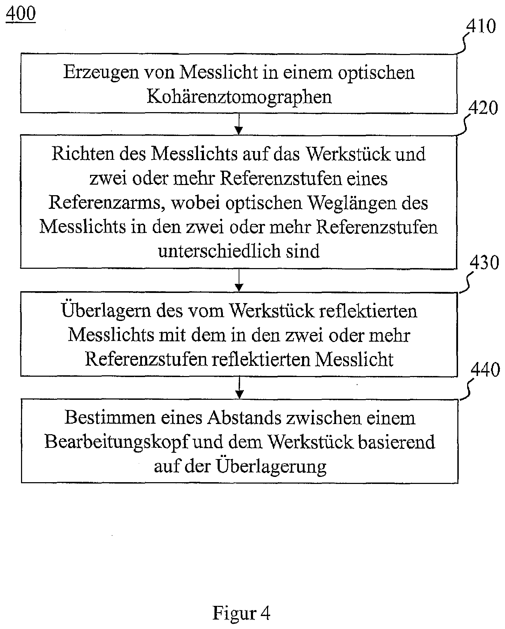

Figur 4 zeigt ein Flussdiagramm eines Verfahrens 400 für die Bearbeitung eines Werkstücks mit einem Laserstrahl.

Das Verfahren 400 umfasst im Block 410 ein Erzeugen von Messlicht in einem optischen Kohärenztomographen, im Block 420 ein Richten des Messlichts auf das Werkstück und zwei oder mehr Referenzstufen eines Referenzarms, wobei optische Weglängen des Messlichts in den zwei oder mehr Referenzstufen unterschiedlich sind, im Block 430 ein Überlagern des vom Werkstück reflektierten Messlichts mit dem in den zwei oder mehr Referenzstufen reflektierten Messlicht, und im Block 440 ein Bestimmen eines Abstands zwischen einem Bearbeitungskopf und dem Werkstück basierend auf der Überlagerung. Insbesondere kann der Abstand basierend einer Interferenz des überlagerten Messlichts bestimmt werden. Das Bestimmen des Abstands kann zudem Addieren eines vorgegebenen Offsets auf die Messwerte umfassen, wie oben beschrieben.

Erfindungsgemäß wird das Messlicht des OCT-Sensorsystems im Referenzarm zu im Wesentlichen gleichen Teilen auf mehr als zwei aufeinanderfolgend angeordnete optische Weglängen bzw. Wegstrecken der Referenzstufen aufgeteilt. Ein Vorteil dieser Anordnung ist, dass das Messlicht aus dem Messarm automatisch mit demjenigen Anteil des Messlichts einer Referenzstufe im Referenzarm interferiert, die die passende optische Weglänge aufweist. Dies ist insbesondere dann der Fall, wenn alle Referenzstufen zu jedem Zeitpunkt erfindungsgemäß gleichmäßig ausgeleuchtet sind. Dadurch entfällt eine synchrone und somit aufwändige Ansteuerung eines mechanischen Elements im Referenzarm, die bei den bisher bekannten herkömmlichen Lösungen zum Einsatz kommen.

## Patentansprüche

1. Laserbearbeitungssystem zur Bearbeitung eines Werkstücks (1) mit einem Laserstrahl (10), umfassend:
einen Bearbeitungskopf (101), und
eine Messvorrichtung zur Bestimmung eines Abstands zwischen einem Laserbearbeitungskopf und einem Werkstück, umfassend:
einen optischen Kohärenztomographen (120), der dazu eingerichtet ist, einen Abstand zwischen dem Bearbeitungskopf (101) und dem Werkstück (1) zu bestimmen, wobei der optische Kohärenztomograph (120) einen Messarm zum Leiten von vom Werkstück (1) reflektiertem Messlicht und einen Referenzarm (200, 300) mit mehr als zwei Referenzstufen (210, 220; 310, 311, 312, 313, 314), die verschiedene optische Weglängen aufweisen, umfasst; und
eine Auswerteeinheit (130), die eingerichtet ist, den Abstand basierend auf einer Überlagerung von Messlicht aus dem Messarm und Messlicht aus dem Referenzarm (200, 300) zu bestimmen,
wobei der Referenzarm (200, 300) eine Strahlteileranordnung (230, 320) aufweist, um das Messlicht auf die mehr als zwei Referenzstufen (210, 220; 310, 311, 312, 313, 314) aufzuteilen,
**dadurch gekennzeichnet, dass**
die Strahlteileranordnung (230, 320) eingerichtet ist, um das Messlicht zu im Wesentlichen gleichen Teilen auf die mehr als zwei Referenzstufen (210, 220; 310, 311, 312, 313, 314) aufzuteilen, und
die mehr als zwei Referenzstufen (210, 220; 310, 311, 312, 313, 314) aufeinanderfolgend angeordnet sind.

2. Laserbearbeitungssystem nach Anspruch 1, wobei der optische Kohärenztomograph dazu eingerichtet ist, das vom Werkstück (1) reflektierte Messlicht und das in den mehr als zwei Referenzstufen (210, 220; 310, 311, 312, 313, 314) reflektierte Messlicht zu überlagern.

3. Laserbearbeitungssystem nach Anspruch 1 oder 2, wobei die Auswerteeinheit (130) eingerichtet ist, den Abstand basierend auf einer Interferenz zwischen dem vom Werkstück (1) reflektierten Messlicht und Messlicht, das in einer der mehr als zwei Referenzstufen (210, 220; 310, 311, 312, 313, 314) reflektiert wird, zu bestimmen.

4. Laserbearbeitungssystem nach Anspruch 3, wobei die Auswerteeinheit (130) eingerichtet ist, zur Bestimmung des Abstands einen vorgegebenen Offset zu berücksichtigen, der der Referenzstufe entspricht, in der das mit dem vom Werkstück (1) reflektierten Messlicht interferierende Messlicht reflektiert wird.

5. Laserbearbeitungssystem nach einem der vorausgehenden Ansprüche, wobei die Strahlteileranordnung (230, 320) wenigstens ein Element umfasst, das aus der Gruppe ausgewählt ist, die aus einem reflektierenden optischen Element, einem teildurchlässigen optischen Element, einem reflektierenden Spiegel (234, 324), einem teildurchlässigen Spiegel, einer Prismenanordnung (232, 322) und einer optischen Faser besteht.

6. Laserbearbeitungssystem nach einem der vorausgehenden Ansprüche, wobei die Strahlteileranordnung (230, 320) ein reflektierendes optisches Element (234, 324) an einer letzten Referenzstufe (234, 314) der mehr als zwei Referenzstufen und ein halbdurchlässiges optisches Element (232, 322) an wenigstens einer der verbleibenden Referenzstufen (232, 310, 311, 312, 313) aufweist.

7. Laserbearbeitungssystem nach einem der vorausgehenden Ansprüche, wobei die Strahlteileranordnung (230, 320) mindestens einen Faserkoppler und mindestens zwei an den Faserkoppler gekoppelte Faserabschnitte aufweist, und wobei das Messlicht für jede Referenzstufe von einem jeweiligen Faserabschnitt bereitgestellt wird.

8. Laserbearbeitungssystem nach einem der vorausgehenden Ansprüche, wobei ein Weglängenunterschied (ΔL) zwischen optischen Weglängen von aufeinanderfolgenden Referenzarmen kleiner oder gleich einem Messbereich des Kohärenztomographen ist, der von einer Kohärenzlänge des Messlichts abhängig ist.

9. Laserbearbeitungssystem nach einem der vorausgehenden Ansprüche, wobei sich die optischen Weglängen aller Referenzstufen um denselben Weglängenunterschied (ΔL) unterscheiden.

10. Verfahren (400) zur Bestimmung eines Abstands zwischen einem Laserbearbeitungskopf (101) und einem Werkstück (1), umfassend:
Richten (420) von Messlicht auf das Werkstück (1) und in mehr als zwei Referenzstufen eines Referenzarms (200, 300), wobei optische Weglängen der mehr als zwei Referenzstufen verschieden sind,
Überlagern (430) des vom Werkstück (1) reflektierten Messlichts mit dem in den mehr als zwei Referenzstufen reflektierten Messlicht; und
Bestimmen (440) eines Abstands zwischen einem Bearbeitungskopf (101) und dem Werkstück (1) basierend auf der Überlagerung,
**dadurch gekennzeichnet, dass**
das Messlicht mittels einer Strahlteileranordnung (230, 330) des Referenzarms (200, 300) zu im Wesentlichen gleichen Teilen auf die mehr als zwei Referenzstufen aufgeteilt wird, und
die mehr als zwei Referenzstufen (210, 220; 310, 311, 312, 313, 314) aufeinanderfolgend angeordnet sind.

11. Verfahren (400) nach Anspruch 10, wobei der Abstand basierend auf einer Interferenz zwischen dem vom Werkstück (1) reflektierten Messlicht und Messlicht, das in einer der mehr als zwei Referenzstufen (210, 220; 310, 311, 312, 313, 314) reflektiert wird, die eine optische Weglänge entsprechend dem Abstand aufweist, bestimmt wird.

## Claims

1. A laser processing system for processing a workpiece (1) with a laser beam (10), comprising:
a processing head (101), and
a measuring device for determining a distance between a laser processing head and a workpiece, comprising:
an optical coherence tomograph (120) configured to determine a distance between the processing head (101) and the workpiece (1), wherein said optical coherence tomograph (120) comprises a measuring arm for guiding measuring light reflected from said workpiece (1) and a reference arm (200, 300) with more than two reference stages (210, 220; 310, 311, 312, 313, 314) having different optical path lengths; and
an evaluation unit (130) configured to determine the distance based on a superposition of measuring light from said measuring arm and measuring light from said reference arm (200, 300),
wherein said reference arm (200, 300) comprises a beam splitter assembly (230, 320) for splitting the measuring light into said more than two reference stages (210, 220; 310, 311, 312, 313, 314),
**characterized in that**
said beam splitter assembly (230, 320) is configured to split the measuring light, in substantially equal parts, into said more than two reference stages (210, 220; 310, 311, 312, 313, 314), and
said more than two reference stages (210, 220; 310, 311, 312, 313, 314) are arranged sequentially.

2. The laser processing system according to claim 1, wherein said optical coherence tomograph is configured to superpose the measuring light reflected by said workpiece (1) and the measuring light reflected in said more than two reference stages (210, 220; 310, 311, 312, 313, 314).

3. The laser processing system according to claim 1 or 2, wherein said evaluation unit (130) is configured to determine the distance based on an interference between the measuring light reflected by said workpiece (1) and the measuring light reflected in one of said more than two reference stages (210, 220; 310, 311, 312, 313, 314).

4. The laser processing system according to claim 3, wherein said evaluation unit (130) is configured to take into account, for determining the distance, a predetermined offset corresponding to the reference stage in which the measuring light is reflected which interferes with the measuring light reflected by said workpiece (1).

5. The laser processing system according to one of the preceding claims, wherein said beam splitter assembly (230, 320) comprises at least one element which is selected from the group consisting of a reflecting optical element, a partially transmissive optical element, a reflecting mirror (234, 324), a partially transmissive mirror, a prism assembly (232, 322), and an optical fiber.

6. The laser processing system according to one of the preceding claims, wherein said beam splitter assembly (230, 320) comprises a reflecting optical element (234, 324) at a last reference stage (234, 314) of said two or more reference stages and a semi-transmissive optical element (232, 322) at at least one of the remaining reference stages (232, 310, 311, 312, 313).

7. The laser processing system according to one of the preceding claims, wherein said beam splitter assembly (230, 320) comprises at least one fiber coupler and at least two fiber sections coupled to the fiber coupler, and wherein the measuring light for each reference stage is provided by a respective fiber section.

8. The laser processing system according to one of the preceding claims, wherein a path length difference (ΔL) between optical path lengths of successive reference arms is less than or equal to a measuring range of the coherence tomograph which is dependent on a coherence length of the measuring light.

9. The measuring device according to one of the preceding claims, wherein the optical path lengths of all reference stages differ by the same path length difference (ΔL).

10. A method (400) for determining a distance between a laser processing head (101) and a workpiece (1), comprising:
directing (420) measuring light onto said workpiece (1) and into more than two reference stages of a reference arm (200, 300), wherein optical path lengths of said more than two reference stages are different,
superposing (430) the measuring light reflected by said workpiece (1) with the measuring light reflected in said more than two reference stages; and
determining (440) a distance between a processing head (101) and said workpiece (1) based on the superposition,
**characterized in that**
the measuring light is split by a beam splitter assembly (230, 320) of the reference arm (200, 300), in substantially equal parts, into said more than two reference stages, and
said more than two reference stages (210, 220; 310, 311, 312, 313, 314) are arranged sequentially.

11. The method (400) of claim 10, wherein the distance is determined based on an interference between the measuring light reflected by said workpiece (1) and the measuring light reflected in one of said more than two reference stages (210, 220; 310, 311, 312, 313, 314) which has an optical path length corresponding to the distance.

## Revendications

1. Système d'usinage au laser pour usiner une pièce (1) en utilisant un faisceau laser (10), comprenant :
une tête d'usinage (101), et
un dispositif de mesure pour déterminer une distance entre une tête d'usinage au laser et une pièce, comprenant :
un tomographe à cohérence optique (120) configuré pour déterminer une distance entre la tête d'usinage (101) et la pièce (1), dans lequel le tomographe à cohérence optique (120) comprend un bras de mesure pour guider de la lumière de mesure réfléchie par la pièce (1) et un bras de référence (200, 300) avec plus de deux étages de référence (210, 220 ; 310, 311, 312, 313, 314) ayant différentes longueurs d'onde optiques ; et
une unité d'évaluation (130) configurée pour déterminer la distance sur la base d'une superposition de lumière de mesure provenant du bras de mesure et de lumière de mesure provenant du bras de référence (200, 300),
dans lequel le bras de référence (200, 300) comporte un ensemble de séparation de faisceau (230, 320) afin de séparer la lumière de mesure dans les plus de deux étages de référence (210, 220 ; 310, 311, 312, 313, 314),
**caractérisé en ce que**
l'ensemble de séparation de faisceau (230, 320) est configuré pour séparer la lumière de mesure en parties sensiblement égales sur les plus de deux étages de référence (210, 220 ; 310, 311, 312, 313, 314), et
les plus de deux étages de référence (210, 220 ; 310, 311, 312, 313, 314) sont agencés les uns à la suite des autres.

2. Système d'usinage au laser selon la revendication 1, dans lequel le tomographe à cohérence optique est configuré pour superposer la lumière de mesure réfléchie par la pièce (1) et la lumière de mesure réfléchie dans les plus de deux étages de référence (210, 220 ; 310, 311, 312, 313, 314).

3. Système d'usinage au laser selon la revendication 1 ou 2, dans lequel l'unité d'évaluation (130) est configurée pour déterminer la distance sur la base d'une interférence entre la lumière de mesure réfléchie par la pièce (1) et la lumière de mesure réfléchie dans l'un des plus de deux étages de référence (210, 220 ; 310, 311, 312, 313, 314).

4. Système d'usinage au laser selon la revendication 3, dans lequel l'unité d'évaluation (130) est configurée pour tenir compte d'un décalage prédéfini pour la détermination de la distance, lequel décalage correspond à l'étage de référence dans lequel est réfléchie la lumière de mesure interférant avec la lumière de mesure réfléchie par la pièce (1).

5. Système d'usinage au laser selon l'une des revendications précédentes, dans lequel l'ensemble de séparation de faisceau (230, 320) comprend au moins un élément choisi parmi le groupe constitué d'un élément optique réfléchissant, d'un élément optique partiellement transmissif, d'un miroir réfléchissant (234, 324), d'un miroir partiellement transmissif, d'un ensemble de prismes (232, 322) et d'une fibre optique.

6. Système d'usinage au laser selon l'une des revendications précédentes, dans lequel l'ensemble de séparation de faisceau (230, 320) comporte un élément optique réfléchissant (234, 324) sur un dernier étage de référence (234, 314) des plus de deux étages de référence et un élément optique semi transmissif (232, 322) sur au moins l'un des étages de référence restants (232, 310, 311, 312, 313).

7. Système d'usinage au laser selon l'une des revendications précédentes, dans lequel l'ensemble de séparation de faisceau (230, 320) comporte au moins un coupleur de fibre et au moins deux sections de fibre couplées au coupleur de fibre, et dans lequel la lumière de mesure est fournie pour chaque étage de référence par une section de fibre respective.

8. Système d'usinage au laser selon l'une des revendications précédentes, dans lequel une différence de longueurs d'onde (ΔL) entre des longueurs d'onde optiques de bras de référence successifs est inférieure ou égale à un intervalle de mesure du tomographe à cohérence qui est dépendante d'une longueur de cohérence de la lumière de mesure.

9. Système d'usinage au laser selon l'une des revendications précédentes, dans lequel les longueurs d'onde optiques de tous les étages de référence diffèrent de la même différence de longueurs d'onde (ΔL).

10. Procédé (400) pour déterminer une distance entre une tête d'usinage au laser (101) et une pièce (1), comportant les étapes consistant à :
diriger (420) de la lumière de mesure sur la pièce (1) et dans plus de deux étages de référence d'un bras de référence (200, 300), dans lequel des longueurs d'onde optiques des plus de deux étages de référence sont différentes,
superposer (430) la lumière de mesure réfléchie par la pièce (1) avec la lumière de mesure réfléchie dans les plus de deux étages de référence ; et
déterminer (440) une distance entre une tête d'usinage (101) et la pièce (1) sur la base de la superposition,
**caractérisé en ce que**
la lumière de mesure est séparée au moyen d'un ensemble de séparation de faisceau (230, 330) du bras de référence (200, 300) en parties sensiblement égales sur les plus de deux étages de référence, et
les plus de deux étages de référence (210, 220 ; 310, 311, 312, 313, 314) sont agencés les uns à la suite des autres.

11. Procédé (400) selon la revendication 10, dans lequel la distance est déterminée sur la base d'une interférence entre la lumière de mesure réfléchie par la pièce (1) et de la lumière de mesure réfléchie dans l'un des plus de deux étages de référence (210, 220 ; 310, 311, 312, 313, 314), qui a une longueur d'onde optique correspondant à la distance.
